# EUROPEAN PATENT APPLICATION

(11) **EP 2 536 006 A1**
(43) Date of publication of application: **19.12.2012**
(21) Application number: 11739344.7
(22) Date of filing: 09.02.2011
(51) Int. Cl.: H02K 9/04, H02K 5/20

(54) **VERTICAL SHAFT DISC-TYPE OUTER ROTOR ELECTRIC MACHINE AND COOLING STRUCTURE THEREOF**

(30) Priority: 08.02.2010 CN 201019114064
(71) Applicant: National Wind Energy Co. Ltd., Pinggu District, Beijing 101206 (CN)
(72) Inventor: JIANG, Dalong, Beijing 101206 (CN); WANG, Jianhui, Beijing 101206 (CN)
(74) Representative: Walder, Jeremy Thomas
(86) International application number: PCT/CN2011/000199
(87) International publication number: WO 2011/095065

(57) **Abstract**

The present invention provides a radiation structure used for vertical axis disc-type external-rotor electric machine, wherein it includes upper ventilation hole, lower ventilation hole and heat exchange inside the revolution axis, and the upper ventilation hole is located on the circumference between the upper end cover bearing of the rotor and the center stator and used for running through the inner spaces of stator and rotor and the space inside the axis, and the lower ventilation hole is located on the circumference between the lower end cover bearing of the rotor and the center stator and used for running through the inner spaces of stator and rotor and the space inside the axis, and the heat exchanger inside the revolution axis is connected between the upper ventilation hole and lower ventilation hole inside the revolution axis and is composed of air duct, fan and air-air heat exchange fin set.

## Description

### Technical field

The present invention relates to a radiation structure used for vertical axis external-rotor electric machine as well as a vertical axis disc-type external-rotor electric machine using such radiation structure.

### Background art

Disc-type external-rotor electric machine is a widely applied electric machine, for example, motor of electric bicycle, gearless traction electric motor and wind turbine, etc. In application, the revolution axis of a disc-type external-rotor electric machine is often vertically placed, thus, it is called a vertical axis (vertical) disc-type external-rotor electric machine.

During rotation of the rotor, the current flow within the stator coil as well as the mechanical friction produces a huge amount of heat. However, since the radiation difficulty generally exists with the existing disc-type rotor electric machines, it is difficult to further improve the power rating of disc-type rotor electric machines.

A air-water cooling device with a good cooling result was disclosed by a Chinese utility model patent numbered ZL 200920115365.3 to address the problem that a single air cooling structure can hardly meet the cooling requirements of a disc-type rotor electric machine rated at MW or above. This device includes a water-cooling jacket provided on the outer wall of the electric machine casing, with a water inlet provided on the top and a water outlet provided at the bottom of the jacket, and inside the jacket a number of independent radial water flow channels are separated into radially along the outer wall of the casing of the wind turbine, with a number of water flow channels interconnected at the water inlet and outlet, and a fan is provided on the internal revolution axis of the wind turbine at least on one side. The said utility model is able to provide a greater refrigeration capacity, helpful for heat exchange between the hot air inside the electric machine and the water-cooling stand, however, it has such shortcomings as complex structure and uneasy installation and maintenance, etc.

### Description of the present invention

The purpose of the present invention is to provide a radiation structure to be used for vertical axis disc-type external-rotor electric machine.

To fulfill this purpose, the present invention provides the following radiation structure, wherein, it includes:
An upper ventilation hole, which is located on the circumference between the upper end cover bearing of the rotor and the center stator and used for running through the inner spaces of stator and rotor and the space inside the axis;
A lower ventilation hole, which is located on the circumference between the lower end cover bearing of the rotor and the center stator and used for running through the inner spaces of stator and rotor and the space inside the axis; and
A heat exchanger inside the revolution axis; which is connected between the upper ventilation hole and lower ventilation hole inside the revolution axis and is composed of air duct, fan and air-air heat exchange fin set.

Thin-plate shaped air ducts interconnected on the outside are formed between the upper end cover of the rotor and the stator as well as between the lower end cover of the rotor and the stator. These air ducts serve as air paths and heat exchange components as well. Heat is transferred from the air inside the air duct to the inner surface of the end covers and then further transferred to the outer surface of the end covers through thermal conduction, and then the heat is transferred to the ambient air from the outer surface as a result of convection, thus, the heat is dispersed.

### A brief description of drawings

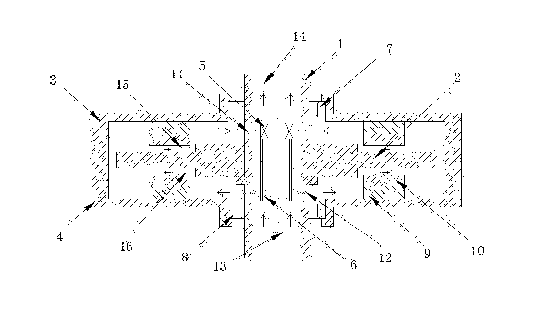

The following is a further detailed description of the present invention in conjunction with drawings attached herein and the specific embodiments. Fig. 1 is a structural schematic view showing the radiation structure of the present invention, in which the direction indicated by the arrow represents the air flow direction.

### Detailed description of the preferred embodiments

In Fig. 1, the vertical axis disc-type external-rotor electric machine comprises a revolution axis 1, stator 2, upper end cover of rotor 3, lower end cover of rotor 4, upper bearing 7 used for supporting the upper end cover of the rotor, lower bearing 8 used for supporting the lower end cover of the external rotor, and a rotor composed of yoke iron 9 and permanent magnet 10.

There is a coil in stator 2 and the heat emitted by the coil is transferred from the surface to the air between the end cover and the stator. If the heat cannot be transferred out effectively and in a timely manner, a high temperature will be formed inside the electric machine, which will affect its efficiency. In order to remove the heat, an upper ventilation hole 11 is provided on the circumference between the upper end cover bearing of the rotor and the center stator, another lower ventilation hole 12 is provided on the circumference between the lower end cover bearing of the rotor and the center stator, and a heat exchanger inside the revolution axis (including fan 5 and air-air heat exchange fin 6) is provided between the upper ventilation hole 11 and the lower ventilation hole 12. Thin-plate shaped air ducts interconnected on the outside are formed between the upper end cover of the rotor and the stator as well as between the lower end cover of the rotor and the stator. These air ducts serve as air paths and heat exchange components as well.

The upper ventilation hole 11 and the lower ventilation hole 12 may respectively be one or several in quantity, they may be round, elliptical, rectangular or in any other form.

A fan 5 provided inside the revolution axis 1 and interconnected with the upper ventilation hole 11 sends the hot air present between the end cover and the stator to the air-air heat exchange fin 6 inside the revolution axis. After transferring the heat to the heat exchange fin of the heat exchanger, the hot air enters the space between the end cover of the electric machine and the stator. The cooled air 13 flows inside the revolution axis from the bottom to the top, during which the heat exchange fins that have been heated by the internal air transfer their heat to the cooled air inside the revolution axis through a heat exchange. When heated, the cooled air 13 becomes the hot air 14, which have its heat exchanged with the ambient air through natural convection. The air-air heat exchange fin functions to transfer the heat of the internal air to the external air, however, there is no exchange of medium between the internal and external air.

Thin-plate shaped air ducts 15 and 16 interconnected on the outside are formed between the upper end cover of the rotor and the stator as well as between the lower end cover of the rotor and the stator. These air ducts serve as air paths and heat exchange components as well. Heat is transferred from the air inside the air duct to the inner surface of the end covers and then further transferred to the outer surface of the end covers through thermal conduction, and then the heat is transferred to the ambient air from the outer surface as a result of convection

In this manner, the heat loss of the electric machine is transferred from the internal air gaps to the end covers, and then to the ambient air outside on one hand; on the other hand, the heat loss of the electric machine is transferred to the air present inside the revolution axis via the heat exchanger inside the axis, and the air inside the revolution axis then brings the heat to the outside.

## Claims

1. A radiation structure used for vertical axis disc-type external-rotor electric machine, wherein, it includes:
An upper ventilation hole, which is located on the circumference between the upper end cover bearing of the rotor and the center stator and used for running through the inner spaces of stator and rotor and the space inside the axis;
A lower ventilation hole, which is located on the circumference between the lower end cover bearing of the rotor and the center stator and used for running through the inner spaces of stator and rotor and the space inside the axis; and
A heat exchanger inside the revolution axis; which is connected between the upper ventilation hole and lower ventilation hole inside the revolution axis.

2. The radiation structure of Claim 1, wherein,
The said upper ventilation hole may be one or several in quantity, and they may be round, elliptical or rectangular in form.

3. The radiation structure of Claim 1, wherein,
The said lower ventilation hole may be one or several in quantity, and they may be round, elliptical or rectangular in form.

4. The radiation structure of Claim 1, wherein,
Thin-plate shaped air ducts interconnected on the outside are formed between the upper end cover of the rotor and the stator as well as between the lower end cover of the rotor and the stator.

5. The radiation structure of Claim 1, wherein, the said heat exchanger inside the revolution axis is composed of air duct, fan and air-air heat exchange fin set.

6. The radiation structure of Claim 1, wherein, heat is transferred from the air inside the air duct to the inner surface of the end covers and then further transferred to the outer surface of the end covers through thermal conduction, and then the heat is transferred to the ambient air from the outer surface as a result of convection

7. The radiation structure of Claim 1, wherein, the cooled air inside the revolution axis carries out heat exchange with the said heat exchanger inside the revolution axis to become hot air before entering the atmosphere, transferring the heat to the outside air.

8. A vertical axis disc-type external-rotor electric machine, wherein, it utilizes the said radiation structure described in Claims 1 through 7.
